Europäisches Patentamt

European Patent Office

Office européen des brevets

(11) Publication number: **0 072 220
B1**

(12) **EUROPEAN PATENT SPECIFICATION**

(45) Date of publication of patent specification: **02.04.86**

(21) Application number: **82304156.1**

(22) Date of filing: **06.08.82**

(51) Int. Cl.⁴: **C 10 G 65/04**

(54) Two-stage hydrocarbon dewaxing hydrotreating process.

(30) Priority: **07.08.81 US 290759**

(43) Date of publication of application:
**16.02.83 Bulletin 83/07**

(45) Publication of the grant of the patent:
**02.04.86 Bulletin 86/14**

(84) Designated Contracting States:
**AT BE DE FR GB IT NL**

(56) References cited:
**EP-A-0 027 380**
**FR-A-2 160 792**
**FR-A-2 439 227**
**GB-A-2 010 321**
**US-A-3 438 887**
**US-A-3 645 914**
**US-A-4 016 245**
**US-A-4 191 638**
**US-A-4 292 166**

(73) Proprietor: **MOBIL OIL CORPORATION
150 East 42nd Street
New York New York 10017 (US)**

(72) Inventor: **Oleck, Stephen Michael
241 Williams Ave.
Moorestown New Jersey 08057 (US)**
Inventor: **Wilson, Robert Currin, Jr.
138 North Bayard Ave.
Woodbury New Jersey 08096 (US)**

(74) Representative: **West, Alan Harry et al
Mobil Court 3 Clements Inn
London WC2A 2EB (GB)**

Courier Press, Leamington Spa, England.

## Description

This invention relates to the manufacture of high-quality lubricating oils, in particular, to the catalytic dewaxing and hydrotreating of waxy distillate lubricating oils.

The present invention provides a process for the preparation of lubricating oil from a waxy hydrocarbon fraction boiling within the range of from 204 to 566° (400 to 1050°F) which comprises at least partially dewaxing the waxy hydrocarbon fraction with a dewaxing catalyst and contacting the reaction product obtained with hydrogen and a hydrotreating catalyst, characterized in that the hydrotreating catalyst comprises a hydrogenation component and one or more zeolites selected from ZSM-5, ZSM-11, ZSM-23 and ZSM-35.

The present invention also provides a hydrotreating catalyst composition comprising one or more zeolites selected from ZSM-5, ZSM-11, ZSM-23 and ZSM-35 and a hydrogenation metal component composited on a porous matrix, characterized in that the hydrogenation component is molybdenum in combination with either cobalt or nickel in elemental, sulfide or oxide form.

The refining of petroleum crude oils to obtain lubricant stocks is based primarily on a series of steps including distillation, solvent refining and dewaxing.

For the preparation of a high grade distillate lubricating oil stock, the current practice is to vacuum distill an atmospheric tower residuum from an appropriate crude oil as the first step. This step provides one or more raw stocks within the boiling range of from 232 to 566°C (450 to 1050°F). After preparation of a raw stock of suitable boiling range, it is extracted with a solvent, e.g. furfural, phenol, sulfalane or chlorex, which is selective for aromatic hydrocarbons and which removes undesirable components. The raffinate from solvent refining is then dewaxed, for example, by admixing with a solvent such as a blend of methyl ethyl ketone and toluene. The mixture is chilled to induce crystallization of the paraffin waxes which are then separated from the raffinate. Sufficient quantities of wax are removed to provide the desired pour point for the raffinate.

Other processes such as hydrofinishing or clay percolation may be used, if needed, to reduce the nitrogen and sulfur content or improve the color of the lubricating oil stock.

Viscosity index (V.I.) is a quality parameter of considerable importance for distillate lubricating oils to be used in automotive engines and aircraft engines which are subject to wide variations in temperature. This index indicates the degree of change of viscosity with temperature. A high viscosity index of 100 indicates an oil that does not tend to become viscous at low temperature or become thin at high temperatures. Measurement of the Saybolt Universal Viscosity of an oil at 38° and 99°C (100 and 210°F), and referral to correlations, provides a measure of the V.I. of the oil. For purposes of the present invention, whenever V.I.

is referred to, it is meant that V.I. as noted in the Viscosity Index tabulations of the ASTM (D567), published by ASTM, 1916 Race Street, Philadelphia, PA, or equivalent.

To prepare high V.I. automotive and aircraft oils, the refiner usually selects a crude oil relatively rich in paraffinic hydrocarbons since experience has shown that crudes poor in paraffins such as those commonly termed "naphthene-base" crudes yield little or no refined stock having a V.I. above about 40. Suitable stocks for high V.I. oils, however, also contain substantial quantities of waxes which result in solvent-refined lubricating oil stocks of high pour point. Thus, in general, the refining of crude oil to prepare acceptable high V.I. distillate stocks ordinarily includes dewaxing to reduce the pour point.

In recent years, catalytic techniques have become available for dewaxing petroleum stocks. Although some attention has been directed to treating gas oils and manufacturing specialty oils primary interest has been, and is, the catalytic dewaxing and subsequent treatment of lube oil stocks. Processes relating to the dewaxing of gas oils and specialty oils are described in U.S. Patent Nos. 3,894,938 and 4,137,148.

U.S. Patent No. 3,894,938 discloses a catalytic dewaxing process in which high pour point, high-sulfur gas oils having a boiling range of from 204° to 482°C (400°F to 900°F) are first contacted, in the presence or absence of added hydrogen, with a ZSM-5 type zeolite hydrodewaxing catalyst which may contain a hydrogenation/—dehydrogenation component. The effluent therefrom is subsequently desulfurized and denitrogenated by contacting it with a cobalt-molybdenum-alumina catalyst.

U.S. Patent No. 4,137,148 discloses a process wherein specialty oils of low pour point and excellent stability are produced from waxy crude distillates having a boiling range of from 232° to 566°C (450°F to 1050°F) by solvent refining, catalytic dewaxing over a zeolite catalyst such as ZSM-5, and hydrotreating. The catalytic dewaxing reaction produces olefins which would impair properties of the dewaxed oil product, if retained. These are saturated by hydrogenation in the hydrotreater, as confirmed by chemical analysis of the hydrotreated product for bromine number. Low bromine numbers are an indication of a satisfactory level of saturation. The hydrotreating step constitutes cascading effluent from the catalytic dewaxing step into a hydrotreating reactor of the type now generally employed for the finishing of lubricating oil stocks. Any of the known hydrotreating catalysts consisting of a hydrogenation component on a non-acidic support can be employed, for example, cobalt-molybdate or nickel-molybdate or molybdenum oxide, on an alumina support. Subsequent to this treatment, the effluent of the hydrotreater is topped by distillation to meet flash and firepoint specifications.

Techniques for dewaxing and subsequent treating of lubricating oil stocks are exemplified in U.S. Patent Nos. 3,755,138 and 4,222,855.

U.S. Patent No. 3,755,138 discloses a process wherein a lube oil stock boiling between 343° to 493°C (650°F and 1100°F) is subjected to mild solvent dewaxing and, subsequently, to hydrodewaxing. The hydrodewaxing step constitutes contacting the lube oil stock with a crystalline aluminosilicate of the ZSM-5 type which contains a metal hydrogenating component in the presence of added hydrogen. In U.S. Patent No. 4,222,855, lube oil stocks boiling between 316° to 566° (600°F and 1050°F) are catalytically dewaxed by contacting them with a crystalline aluminosilicate having particularly characterized pore openings such as ZSM-23 and ZSM-35.

U.S. Patent No. 3,668,113 discloses a process in which petroleum fractions such as gas oil and wax distillate fractions are first passed over a catalyst comprising a crystalline mordenite of reduced alkali metal content and a metal hydrogenating component to remove wax. The reaction product is then passed over a catalyst comprising a refractory inorganic oxide support and a hydrogenating component selected from metals and compounds thereof of Groups VI and VIII of the Periodic Table to remove sulfur.

We have now discovered that the aforedescribed processes which incorporate a hydrotreating step subsequent to at least partial catalytic dewaxing are improved in the hydrotreating step by including in the hydrotreating catalyst a minor amount of a siliceous porous crystalline material from the ZSM-5, ZSM-11, ZSM-23, and ZSM-35 zeolites.

Although the process of this invention is subsequently described as it applies to the catalytic dewaxing and hydrotreating of lube oil stocks the process is applicable to treating other charge stocks containing petroleum wax such as gas oil fractions boiling between 204° to 538°C (400°F and 1000°F).

Accordingly, this invention constitutes the process of reducing the pour point of a hydrocarbon charge stock boiling in the range of 204° to 566°C (400°F to 1050°F), and, particularly, a lubricating oil charge stock boiling between 316° and 566°C (600° and 1050°F) by catalytically dewaxing such charge in the presence of a zeolite catalyst and subsequently subjecting at least the liquid portion thereof to hydrotreating in the presence of a hydrotreating catalyst and a siliceous porous crystalline material selected from ZSM-5, ZSM-11, ZSM-23 and ZSM-35 zeolites.

As indicated previously, this invention is concerned with a catalytic dewaxing and improved hydrotreating operation which results in the production of a lubricating oil having an enhanced V.I. at a given pour point. It should be recognized that there are certain values of pour point which lubricating oils must possess to be commercially useful. Although there is a certain amount of flexibility concerning pour point specification, nevertheless, target pour points for products differ depending on whether heavy or light neutral stock or bright stock is being produced. In general, it is necessary that the pour point of a heavy neutral stock be no higher than about −7°C (20°F) and the pour point of a light neutral stock be no higher than about −15°C (5°F). The expression "heavy neutral" is intended to include a product typically having the following properties:

|  | Charge | Product |
|---|---|---|
| API Gravity | 29.2 | 27.8 |
| Pour Point, °C (°F) | 41 (105) | 7 (20) |
| Kinematic Viscosity, mm²/s at 38°C (100°F) | 81.9 | 108.4 |
| at 99°C (210°F) | 9.95 | 10.99 |
| Boiling Range (IBP-95%), °C (°F) | 333—521 (632—970) | 354—528 (669—983) |

The expression "light neutral" is intended to include a product typically having the following properties:

|  | Charge | Product |
|---|---|---|
| API Gravity | 32.1 | 29.6 |
| Pour Point, °C (°F) | 35 (95) | 5 (−15) |
| Kinematic Viscosity, mm²/s | | |
| at 38°C (100°F) | — | 37.84 |
| at 54°C (130°F) | 14.28 | — |
| at 99°C (210°F) | 4.47 | 5.64 |
| Boiling Range (IBP-95%), °C (°F) | 364—452 (687—847) | 380—451 (716—844) |

The charge stock used in the process of the invention thus includes petroleum oils boiling within the aforenoted range as well as other processed oils. The boiling points referred to are boiling points at atmospheric pressure and may be determined by vacuum assay in the manner known to those skilled in the art.

In a preferred embodiment of this invention, a viscous distillate fraction of crude petroleum oil, isolated by vacuum distillation of a reduced crude from atmospheric distillation, is solvent refined by countercurrent extraction with at least an equal volume (100 vol. %) of a selective solvent such as furfural. It is preferred to use 1.5 to 2.5 volumes of solvent per volume of oil. The raffinate is subjected to catalytic dewaxing by mixing with hydrogen and contacting it at about 260° to about 357°C (500 to about 675°F) with a catalyst which can be of the ZSM-5 type and can have incorporated therein a hydrogen transfer functional component such as nickel, palladium or platinum.

In some instances, it may be desirable to partially dewax the solvent-refined stock by conventional solvent dewaxing techniques prior to catalytic dewaxing. The higher melting point waxes so removed are those of greater hardness and higher market value than the waxes removed in taking the product to a still lower pour point.

In gas oil dewaxing, the dewaxing step is operated at a temperature of about 149—538°C (300—1000°F), a pressure of 101—13,890 kPa (0—2000 psig), and an LHSV of 0.1 to 10 with a hydrogen to hydrocarbon ratio of about 0 to 25:1. This catalytic dewaxing phase of the overall operation is described in U.S. Patent No. 3,894,938.

In lube stock dewaxing, conditions for the hydrodewaxing step include a temperature between about 260° and about 357°C (500° and about 675°F), a pressure between 791 and 20,786 kPa (100 and 3000 psig) and preferably between 1480 and 6996 (200 and 1000 psig). The liquid hourly space velocity is generally between 0.1 and 10 and preferably between 0.5 and 4 and the hydrogen to feedstock ratio is generally between 71 and 1424 Nl/l (400 and 8000 standard cubic feet (scf) of hydrogen per barrel of feed) and preferably between 142 and 712 Nl/l (800 and 4000 scf of hydrogen per barrel of feed). The catalytic dewaxing step of this invention may be conducted by contacting the feed to be dewaxed with a fixed stationary bed of catalyst, or with a transport bed, as desired. A simple and therefore preferred configuration is a trickle-bed operation in which the feed is allowed to trickle through a stationary fixed bed, preferably in the presence of hydrogen. The dewaxing operation usually is initiated at a temperature of about 260°C (500°F). This temperature is, of course, raised as the catalyst ages in order to maintain catalytic activity. In general, the run is terminated at an end-of-run temperature of about 357°C (675°F), at which time the catalyst may be reactivated by contact at elevated temperature with hydrogen gas, or regenerated by contact with oxygen-containing gas. Catalysts which can be used include those of the ZSM-5 type as set forth in U.S. Patent Nos. 3,894,938, 4,137,148 and USE—28,398. The catalyst, particularly if it is of the ZSM-5 type, can have incorporated therein a hydrogen transfer functional component such as nickel, palladium, or platinum in a proportion of 0.05 to 5 weight percent based on the total weight of catalyst.

The product of the catalytic dewaxing step can be fractionated into liquid and gas portions by cooling to a prescribed temperature at an appropriate pressure. The liquid can then be subjected to the hydrotreating step. It is preferred, however, to subject the entire dewaxed product, to the hydrotreating step. In general, hydrotreating conditions include a temperature of 218° to 316°C (425 to 600°F), preferably 246° to 288°C (475 to 550°F); a space velocity (LHSV) of 0.1 to 4.0 volumes of charge oil per volume of catalyst per hour, preferably 0.5 to 1 LHSV; a hydrogen partial pressure of 1035—10,350 kPa (150—1500 psia) preferably 1380—3450 kPa (200—500 psia) with 89 to 890 Nl/l (500 to 5000 standard cubic feet of hydrogen per barrel of feed (SCF/B)), preferably 10,350 to 17,250 Nl/l (1500 to 2500 SCF/B). It is preferred to conduct the hydrotreating step by contacting the dewaxed product with the hydrotreating catalyst in a fixed stationary bed.

The composition and use of the hydrotreating catalyst in the hydrotreating step is the feature of this invention. We have determined that incorporating a zeolite selected from ZSM-5, ZSM-11, ZSM-23, and ZSM-35 in the second-stage hydrotreating catalyst results in a further reduction of pour point without significantly impairing the hydrotreating function of the catalyst.

ZSM-5 is described in U.S. Patent No. 3,702,886 and Reissue 29,948, ZSM-11 in U.S. Patent No. 3,706,979, ZSM-23 in U.S. Patent No. 4,076,842 and ZSM-35 U.S. Patent No. 4,016,245.

The original cations associated with each of the crystalline aluminosilicate zeolites utilized herein may be replaced by a wide variety of other cations according to techniques well known in the art. Typical replacing cations include hydrogen, ammonium and metal cations, including mixtures of the same. Of the replacing metallic cations, particular preference is given to cations of metals such as rare earth metals, manganese, calcium as well as metals of Group IIB of the Periodic Table, e.g. zinc, and Group VIII of the Periodic Table, e.g. nickel, platinum and palladium.

Typical ion exchange techniques would be to contact the particular zeolite with a salt of the desired replacing cation. Although a wide variety of salts can be employed, particular preference is given to chlorides, nitrates and sulfates.

Representative ion exchange techniques are disclosed in a wide variety of patents including U.S. Patent Nos. 3,140,249, 3,130,251 and 3,140,253.

Following contact with solution of the desired replacing cation, the zeolite is then preferably washed with water and dried at a temperature ranging from 66° to about 316°C (150°F to about 600°F) and thereafter calcined in air or other inert gas at temperatures ranging from about 260° to 816°C (500°F to 1500°F) for periods of time ranging from 1 to 48 hours or more. It has been further found that catalyst of improved selectivity and other beneficial properties may be obtained by subjecting the zeolite to treatment with steam at elevated temperature ranging from 260° to 649°C (500°F to 1200°F) and preferably 399° to 538°C (750°F to 1000°F). The treatment may be accomplished in an atmosphere of 100% steam or an atmosphere consisting of steam and a gas which is substantially inert to the zeolites.

A similar treatment can be accomplished at lower temperatures and elevated pressure, e.g. 177—371°C (350—700°F) at 10 to about 200 atmospheres.

Prior to use, the zeolites should be dehydrated at least partially. This can be done by heating to a temperature in the range of 93° to 538°C (200° to 1000°F) in an inert atmosphere, such as air or nitrogen and at atmospheric or subatmospheric pressures for between 1 and 48 hours. Dehydration can also be performed at lower temperatures merely by using a vacuum, but a longer time is required to obtain sufficient amount of dehydration.

The hydrogenating component utilized in the hydrotreating step of the process can be one or more of the metals ordinarily used for this purpose, in the elemental, sulfide or oxide form such as tungsten, molybdenum, nickel, cobalt, or a noble metal such as platinum or palladium. Preferred catalysts are cobalt or nickel in the elemental, sulfide or oxide form each in combination with molybdenum in the elemental, sulfide or oxide form supported on a non-acidic refractory material, preferably a non acid one such as alumina.

Although it is within the concept of this invention to use a mixture of the zeolite component and the hydrogenating component in which each component is contained in separate discrete particles forming a mixture of particles, it is preferred to combine the zeolite and the metal into one particle. Accordingly, a preferred method for preparing the catalyst is to blend the zeolite with a refractory inorganic oxide, preferably hydrated alumina, form the composite into extrudates, dry the extrudate and calcine it in an atmosphere such as nitrogen or air. The extrudate may then be exchanged with cations like ammonium and recalcined, prior to impregnation or exchange with hydrogenation type metals such as molybdenum, nickel and cobalt. Drying and calcining subsequent to impregnation completes the preparation.

The catalysts of this invention are typically prepared by extruding a mixture of about 40% or less of unexchanged zeolite (i.e., as crystallized, Na form) and alumina.

The extrudate is dried and then calcined in flowing nitrogen for three hours at 338°C (1000°F) and then in air for three hours at 538°C (1000°F).

It is exchanged with $NH_4NO_3$ solution to obtain a product having low sodium content, dried, and recalcined in air for three hours at 538°C (1000°F). The extrudate is then impregnated with solutions containing salts of the desired hydrogenation metal components, dried and recalcined at 538°C (1000°F).

Generally, the zeolite or mixture of zeolites in the finished dried composite will range from about 5 to 40 percent by weight and the amount of hydrogenative metal or metals (in elemental, sulfide, or oxide form) will range between 0.05 and 25 percent by weight of the catalyst composition.

## Examples

The evaluation procedures described in the following examples were conducted in a batch, shaker bomb unit that has been described in Ind. Eng. Chem., Vol. 50, page 47 (1958). The unit consists of a cylindrical one-liter pressure vessel mounted at the end of a reciprocating piston. An engine drives the piston up and down 200 strokes per minute. While the bomb is shaken in this manner, it moves through the center of a stationary induction coil. The bomb serves as a susceptor, and its contents are heated inductively to reaction temperature in 2—3 minutes. At the end of a run, the reactor is cooled in 2—3 minutes using a water spray. A thermocouple is located in a central thermowell. The reactor is connected to a pressurized gas system through loops of flexible tubing; hydrogen is supplied during the reaction period to maintain pressure.

The catalysts described in Examples 2—7 were prepared as described above by mixing ZSM-5 zeolite of an average crystallite size of 0.05 μm with alumina in the ratios indicated in Examples 2—7. The composited mixtures were extruded, dried and calcined in accordance with the preparation procedure already outlined, exchanged with ammonium nitrate to low sodium content, dried and calcined. They were then impregnated with solutions of ammonium heptamolybdate and nickel chloride. The dried, calcined product from this step resulted in a catalyst containing 5 percent by weight of nickel oxide and 17 percent by weight of molybdenum trioxide and corresponds to the metal concentration of the catalysts in Examples 2—7. In Examples 2—4 the diameter of the catalyst was .79 mm (1/32 inch). In Examples 5—7, the diameter was 1.58 mm (1/16 inch).

Example 1
Dewaxing stage

Multiple runs were conducted with the raffinate from the furfural extraction of a heavy neutral oil having the following properties:

| | |
|---|---|
| API Gravity | 29.2 |
| Pour Point | 41°C (105°F) |
| Kinematic Viscosity, mm²/s | |
| at 54°C (130°F) | 38.72 |
| at 99°C (210°F) | 9.26 |
| Boiling range | 409—503°C (769—937°F) (95% point) |
| Sulfur Content | 0.74 weight % |

In each run, 88 grams of the raffinate were charged with 17.6 grams of a dewaxing catalyst into the shaker bomb. The reaction mixture was allowed to react in the presence of hydrogen for a period of 130 minutes at a pressure of 3549 kPa (500 psig) and a temperature of 288°C (550°F). The catalyst was a composite of 35 percent alumina and 65 percent of a nickel exchange ZSM-5 zeolite. The liquid product from these runs was combined and used as a charge stock for the following examples. Although this particular batch of product was not tested for pour point, bromine number and sulfur content, runs made under the same conditions with this same neutral oil provide a −7°C (20°F) pour point, a 1.4 bromine number, and a 0.95 weight percent sulfur content. Example 1 simulates the first stage treatment of a waxy paraffinic stock corresponding to the processes described in U.S. Patent Nos. 4,137,148 and 3,700,585.

Hydrotreating stage

Examples 2 and 5 illustrate the prior art processes for hydrotreating after a catalytic dewaxing step, i.e. hydrotreating in the presence of catalyst that contains no zeolite. Examples 3, 4, 6 and 7 illustrate the process of the present invention.

In each of the following runs, 88-gram portions of the product from Example 1 were hydrotreated in the shaker bomb unit at 268°C (515°F), and 3549 kPa (500 psig) for 130 minutes in the presence of 17.6 grams of each of the catalyst described below.

Example 2

The nickel-molybdenum catalyst of Example 2 was prepared on a support comprising 100% alumina and no zeolite.

The 650°F+ product had the following properties: −7°C (20°F) pour point; 0.1 bromine number; 95.2 viscosity index; and 0.44 weight percent sulfur.

Example 3

The nickel-molybdenum catalyst of Example 3 was prepared on a support comprising 15 weight percent of ZSM-5 zeolite and 85 weight percent of alumina.

The 650°F+ product had the following properties: −12°C (10°F) pour point; 0.1 bromine number; 93.2 viscosity index and 0.49 weight percent sulfur.

Note that the pour point is 5°C (10°F) lower than that of the prior art process of Example 2, indicating a greater degree of dewaxing achieved in the process of this invention. The low bromine number shows that the improved dewaxing result is achieved without impairing the ability of the process to saturate olefins.

Example 4

The nickel-molybdenum catalyst of Example 4 was prepared on a support comprising 15 weight percent of ZSM-5 zeolite and 85 weight percent of alumina. The support was treated in an atmosphere of 100% steam for 6 hours at 482°C (900°F) before impregnation with nickel and molybdenum.

The 343°C+ (650°F+) product had the following properties: −9°C (15°F) pour point; 0.3 bromine number; 93.0 viscosity index and 0.51 weight percent sulfur.

Note that the product pour point is 2°C (5°F) lower than that of the prior art process of Example 2, thus indicating a greater degree of dewaxing achieved in the present process. The 0.3 bromine number is an indication of an acceptable level of olefin saturation.

Example 5

The nickel-molybdenum catalyst of Example 5 was prepared on a support comprising 100% alumina and no zeolite. The support diameter was 1.58 mm (1/16 inch), as were the catalysts of Example 6 and 7.

The 343°C+ (650°F+) product had the following properties: −4°C (25°F) pour point; 0.3 bromine number; 96.3 viscosity index and 0.63 weight percent sulfur.

This example illustrates prior art hydrotreating processes for comparison with Examples 6 and 7.

Example 6

The nickel-molybdenum catalyst of Example 6 was prepared on a support comprising 30 weight percent of ZSM-5 zeolite and 70 weight percent alumina. The 343°C+ (650°F+) product properties were −12°C (10°F) pour point; 0.1 bromine number; 91.9 viscosity index and 0.49 weight percent sulfur. The pour point was 8°C (15°F) lower than that in the prior art process of Example 5, indicating again the greater degree of dewaxing achieved by the process of this invention. Also, the low bromine number of 0.1 indicates an excellent degree of saturation with the process of this invention.

Example 7

The nickel-molybdenum catalyst of Example 7 was prepared on a support comprising 30 weight percent of ZSM-5 zeolite and 70 weight percent of alumina, that was steamed 6 hours at 482°C (900°F) prior to impregnation. The 343°C (650°F+) product properties were −15°C (5°F) pour point; 0.5 bromine number; 92.0 viscosity index and 0.57 weight percent sulfur. Again, this example of the process of this invention shows an 11°C (20°F) lower pour point than that in Example 5, a substantial advantage in activity. Also, the 0.5 bromine number is well with acceptable limits of saturation.

**Claims**

1. A process for the preparation of lubricating oil from a waxy hydrocarbon fraction boiling within the range of from 204 to 566°C (400 to 1050°F) which comprises at least partially dewaxing the waxy hydrocarbon fraction with a dewaxing catalyst and contacting the reaction product obtained with hydrogen and a hydrotreating catalyst, characterized in that the hydrotreating catalyst comprises a hydrogenation component and one or more zeolites selected from ZSM-5, ZSM-11, ZSM-23 and ZSM-35.

2. A process according to Claim 1, wherein the reaction product is contacted with hydrogen and the hydrotreating catalyst at a temperature of from 218 to 316°C (425 to 600°F), a hydrogen partial pressure of from 1136 to 10,443 kPa (150 to 1500 psig), an LHSV of from 0.1 to 4.0 and from 89 to 890 Nl hydrogen/l of reaction product (500 to 5000 standard cubic feet of hydrogen per barrel).

3. A process according to Claim 1 or Claim 2, wherein the hydrogenation component of the hydrotreating catalyst comprises tungsten, molybdenum, nickel, cobalt, platinum or palladium or an oxide or sulfide thereof, or a mixture of any two or more thereof.

4. A process according to Claim 3, wherein the hydrogenation component comprises molybdenum and either cobalt or nickel in the elemental or oxide or sulfide form.

5. A process according to any one of Claims 1 to 4, wherein the hydrotreating catalyst comprises the zeolite, the hydrogenation component and a porous matrix.

6. A process according to Claim 5, wherein the porous matrix is alumina.

7. A process according to any one of Claims 1 to 4, wherein the hydrotreating catalyst comprises the hydrogenation component and the zeolite, each composited in separate catalyst particles.

8. A process according to any one of Claims 5 to 7, wherein the concentration of metal in elemental, oxide or sulfide form in the hydrotreating catalyst is from 0.05 to 25 percent by weight and the concentration of zeolite in the hydrotreating catalyst is from 5 to 40 percent by weight.

9. A process according to any one of Claims 1 to 8, wherein the waxy hydrocarbon fraction is a fraction boiling within the range of from 316 to 566°C (660 to 1050°F).

10. A hydrotreating catalyst composition comprising one or more zeolites selected from ZSM-5, ZSM-11, ZSM-23 and ZSM-35 and a hydrogenation component composited on a porous matrix, characterized in that the hydrogenation component is molybdenum in combination with either cobalt or nickel in elemental, sulfide or oxide form.

11. A catalyst according to Claim 10, wherein the porous matrix is alumina.

12. A catalyst according to Claim 10 or Claim 11, wherein the concentration of hydrogenation component is from 0.05 to 25 percent by weight and the concentration of zeolite is from 5 to 40 percent by weight.

**Revendications**

1. Procédé de préparation d'une huile lubrifiante à partir d'une fraction d'hydrocarbures paraffiniques bouillant dans l'intervalle de températures de 204 à 566°C (400 à 1 050°F) qui consiste à déparaffiner au moins partiellement la fraction d'hydrocarbures paraffiniques en présence d'un catalyseur de déparaffinage et à mettre en contact le produit de la réaction obtenu avec de l'hydrogène et un catalyseur d'hydrogénation, caractérisé en ce que le catalyseur d'hydrogénation comprend un agent d'hydrogénation et une ou plusieurs zéolites choisies parmi la ZSM-5, la ZSM-11, la ZSM-23 et la ZSM-35.

2. Procédé selon la revendication 1, dans lequel on met le produit de la réaction au contact de l'hydrogène et du catalyseur d'hydrogénation à une température de 218 à 316°C (425 à 600°F), sous une pression partielle d'hydrogène de 1 136 à 10 443 kPa (150 à 1 500 psig), à une VSHL de 0,1 à 4,0 et de 89 à 890 Nl d,hydrogène/l de produit de la réaction (500 à 5 000 pieds cubiques standards d'hydrogène par baril).

3. Procédé selon la revendication 1 ou 2, dans lequel l'agent d'hydrogénation du catalyseur d'hydrogénation comprend du tungstène, du molybdène, du nickel, du cobalt, du platine ou du palladium ou un de leurs oxydes ou de leurs sulfures ou un mélange de deux ou de plus de deux de ceux-ci.

4. Procédé selon la revendication 3, dans lequel l'agent d'hydrogénation comprend du molybdène et soit du cobalt, soit du nickel sous forme élémentaire, sous forme d'oxyde ou de sulfure.

5. Procédé selon l'une quelconque des revendications 1 à 4, dans lequel le catalyseur d'hydrogénation comprend la zéolite, l'agent d'hydrogénation et une matrice poreuse.

6. Procédé selon la revendication 5, dans lequel la matrice poreuse est l'aluminium.

7. Procédé selon l'une quelconque des revendications 1 à 4, dans lequel le catalyseur d'hydrogénation comprend l'agent d'hydrogénation et le zéolite, chacun entrant dans le catalyseur sous la forme de particules séparées.

8. Procédé selon l'une quelconque des revendications 5 à 7, dans lequel la concentration en métal sous forme élémentaire, sous forme d'oxyde ou de sulfure du catalyseur d'hydrogénation est comprise entre 0,05 et 25% en poids et la concentration en zéolite du catalyseur d'hydrogénation est comprise entre 5 et 40% en poids.

9. Procédé selon l'une quelconque des revendications 1 à 8, dans lequel la fraction d'hydrocarbures paraffiniques est une fraction dont le point d'ébullition se situe entre 316 et 566°C (660 à 1 050°F).

10. Composition de catalyseur d'hydrogénation comprenant une ou plusieurs zéolites choisies parma la ZSM-5, la ZSM-11, la ZSM-23 et la ZSM-35 et un agent d'hydrogénation associé à une matrice poreuse, caractérisée en ce que l'agent d'hydrogénation est le molybdène en combinaison avec soit le cobalt, soit le nickel sous forme élémentaire sous forme de sulfure ou d'oxyde.

11. Catalyseur selon la revendication 10, dans lequel la matrice poreuse est l'alumine.

12. Catalyseur selon la revendication 10 ou 11, dans lequel la concentration en agent d'hydrogénation est comprise entre 0,05 et 25% en poids et la concentration en zéolite est comprise entre 5 et 40% en poids.

## Patentansprüche

1. Verfahren zur Herstellung von Schmieröl aus einer wachsartigen Kohlenwasserstofraktion, die in einem Bereich von 204 bis 566°C (400 bis 1050°F) siedet, welches das zumindest teilweise Entwachsen der wachsartigen Kohlenwasserstoffraktion mit einem Entwachsungkatalysator und das Inkontaktbringen des Reaktionsproduktes, das mit Wasserstoff erhalten wurde, mit einem Katalysator zur Wasserstoffbehandlung umfaßt, dadurch gekennzeichnet, daß der Katalysator zur Wasserstoffbehandlung eine Hydrierungskomponente und einen oder mehrere Zeolithe umfaßt, die aus ZSM-5, ZSM-11, ZSM-23, und ZSM-35 ausgewählt sind.

2. Verfahren nach Anspruch 1, worin das Reaktionsprodukt mit Wasserstoff und dem Katalysator zur Wasserstoffbehandlung bei einer Temperatur von 218 bis 316°C (425 bis 600°F), einem Wasserstoffpartialdruck von 1136 bis 10443 kPa (150 bis 1500 psig) und einer LHSV von 0,1 bis 4,0 und von 98 bis 890 Nl Wasserstoff/l des Reaktionsproduktes (500 bis 5000 standard cubic feet Wasserstoff/barrel) in Kontakt gebracht wird.

3. Verfahren nach Anspruch 1 oder 2, worin die Hydrierungskomponente des Katalysators zur Wasserstoff behandlung Wolfram, Molybdän, Nickel, Kobalt, Platin oder Palladium oder ein Oxid oder ein Sulfid davon oder eine Mischung von zwei oder mehreren davon umfaßt.

4. Verfahren nach Anspruch 3, worin die Hydrierungskomponente Molybdän und entweder Kobalt oder Nickel in der elementaren oder Oxid- oder Sulfidform umfaßt.

5. Verfahren nach einem der Ansprüche 1 bis 4, worin der Katalysator zur Wasserstoffbehandlung den Zeolith, die Hydrierungskomponente und eine poröse Matrix umfaßt.

6. Verfahren nach Anspruch 5, worin die poröse Matrix Aluminiumoxid ist.

7. Verfahren nach einem der Ansprüche 1 bis 4, worin der Katalysator zur Wasserstoffbehandlung die Hydrierungskomponente und den Zeolith umfaßt, beide in separaten Katalysatorpartikeln zusammengesetzt.

8. Verfahren nach einem der Ansprüche 5 bis 7, worin die Konzentration des Metalls in der elementaren, Oxid- oder Sulfidform in dem Katalysator zur Wasserstoffbehandlung von 0,05 bis 25 Gew.-% und die Konzentration des Zeoliths in dem Katalysator zue Wasserstoffbehandlung von 5 bis 40 Gew.-% betragen.

9. Verfahren nach einem der Ansprüche 1 bis 8, worin die wachsartige Kohlenwasserstoffraktion eine Fraktion ist, die im Bereich von 316 bis 566°C (660 bis 1050°F) siedet.

10. Katalysatorzusammensetzung zur Wasserstoffbehandlung, die einen oder mehrere Zeolithe, ausgewählt aus ZSM-5, ZSM-11, ZSM-23 und ZSM-35, und eine Hydrierungskomponente umfaßt, zusammengesetzt auf einer porösen Matrix, dadurch gekennzeichnet, daß die Hydrierungskomponente Molybdän in Verbindung mit entweder Kobalt oder Nickel in elementarer, Sulfid- oder Oxidform ist.

11. Katalysator nach Anspruch 10, worin die poröse matrix Aluminiumoxid ist.

12. Katalysator nach Anspruch 10 oder 11, worin die Konzentration der Hydrierungskomponente von 0,05 bis 25 Gew.-% und die Konzentration des Zeoliths von 5 bis 40 Gew.-% betragen.